# EUROPEAN PATENT APPLICATION

(11) **EP 4 687 194 A2**
(43) Date of publication of application: **04.02.2026**
(21) Application number: 25185598.7
(22) Date of filing: 26.06.2025
(51) Int. Cl.: H01M 10/613, H01M 10/625, H01M 10/63, H01M 10/6568

(54) **BATTERY SYSTEM**

(30) Priority: 29.07.2024 US 202463676487 P; 23.04.2025 US 202519186955
(71) Applicant: Deere & Company, Moline, IL 61265 (US)
(72) Inventor: KENNEDY, THOMAS L, 68163 Mannheim (DE); WANTSCHIK, PAUL A., 68163 Mannheim (DE)
(74) Representative: Reichert, Christian

(57) **Abstract**

A battery system (10) is disclosed. The battery system (10) comprising: an electric device (11, 12, 80) configured to be thermally controlled by a circulation of a thermal fluid (18); a thermal management system (16, 16', 16") configured to circulate the thermal fluid (18) to at least the electric device (11, 12, 80); and a thermal fluid water separator assembly (20) disposed in the thermal management system (16, 16', 16") and having a media (46) configured to separate a water from the thermal fluid (18), the water separated from the thermal fluid (18) by the thermal fluid water separator assembly (20) being a separated water, wherein the thermal fluid water separator assembly (20) is further configured to collect the separated water and accommodate a selective removal of the separated water from the thermal fluid water separator assembly (20).

## Description

### FIELD OF THE DISCLOSURE

The present disclosure generally relates to thermal management systems, and, more specifically, to thermal management systems having a thermal fluid water separator, and which are utilized with systems having one or more thermally managed electric devices.

### BACKGROUND

At least certain systems for vehicles, including agricultural, construction, and harvesting vehicles, among others, can utilize a thermal fluid to assist with controlling the temperature of one or more electric devices. For example, a battery system can be configured to assist with maintaining the cells of one or more batteries of the battery system being, at, or around, certain operating temperatures. Moreover, such battery systems can circulate a thermal fluid(s) that can assist with the cells of a battery of the electric system being maintained at temperatures at which the battery can be charged, as well as discharged, at current levels that can support various functions of the associated vehicle. Such thermal fluids can include, for example, water, coolant, and/or one or more dielectric and/or electrically conductive oils or other liquids, gases, and/or other fluids.

### SUMMARY

In accordance with aspects of the present disclosure, a battery system includes a plurality of battery cells, at least one battery housing containing the plurality of battery cells, a thermal management system circulating a thermal fluid through the at least one battery housing to thermally control the plurality of battery cells in the at least one battery housing, and a thermal fluid water separator assembly disposed in the thermal management system and configured to separate water from the thermal fluid in the thermal management system.

The thermal management system may further include a thermal fluid pump. The thermal management system may further include a thermal fluid tank. The thermal management system may further include at least one thermal fluid manifold. The thermal management system may further include a thermal management system controller. The thermal management system can also be used with a battery system, among other electric systems. Additionally, in accordance with aspects of the present disclosure, a system is provided that can include an electric device configured to be thermally controlled by a circulation of a thermal fluid, and a thermal management system configured to circulate the thermal fluid to at least the electric device. The system can also include a thermal fluid water separator assembly that can be disposed in the thermal management system. The thermal fluid water separator assembly can have a media configured to separate a water from the thermal fluid, the water separated from the thermal fluid by the thermal fluid water separator assembly being a separated water. Additionally, the thermal fluid water separator assembly can be further configured to collect the separated water and accommodate a selective removal of the separated water from the thermal fluid water separator assembly.

In accordance with aspects of the present disclosure, a thermal fluid water separator assembly for a thermal management system circulates a thermal fluid in an immersion cooled battery system. The thermal fluid water separator assembly includes a housing, a thermal fluid inlet disposed in the housing, a thermal fluid outlet disposed in the housing, and a water collection portion configured to collect water from the thermal fluid.

The water collection portion may be disposed at a lower end of the housing. Gravity may at least partially cause water to collect in the water collection portion. The thermal fluid water separator assembly may further include a water separator disposed in a thermal fluid pathway between the thermal fluid inlet and the thermal fluid outlet. The water separator may be hydrophobic. The water separator may include a plurality of orifices. The thermal fluid inlet may be disposed at an upper end of the housing. The thermal fluid outlet may be disposed at an upper end of the housing. The housing may define an axis, and the thermal fluid inlet may be disposed radially outside of the thermal fluid outlet relative to the axis. The thermal fluid water separator assembly may further include a valve disposed at the water collection portion and configured for selective removal of water from the water collection portion.

These and other features of the present disclosure will become more apparent from the following description of the illustrative embodiments.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements can be exaggerated relative to other elements for clarity. Further, where considered appropriate, reference labels have been repeated among the figures to indicate corresponding or analogous elements.
Figure 1 illustrates an exemplary thermal management system used with a battery system in accordance with an embodiment of the present disclosure.
Figure 2 illustrates an exemplary thermal fluid water separator assembly for a thermal management system in accordance with an embodiment of the present disclosure.
Figure 3 illustrates an exemplary thermal management system used with a battery system, and which includes a secondary thermal fluid pump in accordance with an embodiment of the present disclosure.
Figure 4 illustrates an exemplary thermal management system used with a battery system, and which has at least a localized low point positioned to assist with selective delivery of accumulated water to the thermal fluid water separator assembly in accordance with an embodiment of the present disclosure.

Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described can include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements or orderings. However, it should be appreciated that such specific arrangements and orderings may not be required. Rather, in some embodiments, such features can be arranged in a different manner or order than shown in the illustrative figures. Additionally, the inclusion of a structural or method feature in a particular figure is not meant to imply that such feature is required in all embodiments and, in some embodiments, may not be included or can be combined with other features.

At least certain types of systems, such as, for example, battery systems, among other systems used with thermally managed electric devices, can have thermal management systems, including fluid circuits, having a thermal fluid tank that can be vented to the atmosphere. Such venting can be utilized to reduce the incidence of liquid water ingress into the battery system. However, such atmospheric venting can also potentially provide a location for humidity to enter into either or both the battery system and the thermal management system. Moreover, when humidity enters an enclosed space, the humidity has the capability to condense, thereby resulting in the formation of water in the thermal fluid that is circulated through the battery system and/or thermal management system. Such water can be potentially harmful to the battery system, including enhancing the potential for harmful electrical shorting, as well as adversely impacting efficiency and longevity of the associated electric device (e.g., battery). Embodiments of the subject disclosure disclose a thermal fluid management system configured and operated to remove water from a thermal fluid used to regulate the temperature of one or more electric devices of a system, including, for example, cells of one or more batteries of a battery system. Removal of water from the thermal fluid, also referred to as a thermal cooling fluid, can improve the efficiency and longevity of the associated electric device, including, for example, a battery of a battery system.

Embodiments of the subject disclosure can be utilized with a variety of different types of thermal fluids and for a variety of different types of thermally managed electric devices and associated systems. For example, thermal management systems that can be utilized with systems used to control the temperature of electric devices can include passive air cooling systems, active indirect cooling systems that utilize water-glycol cooled heat exchangers, or immersion cooling systems, among other types of thermal fluid management systems. The thermal fluid management systems can also be utilized with a variety of different types of applications, including, for example, in connection with electric vehicle battery systems.

The thermal management system, which can, according to certain embodiments, be used with a battery system, among other types of systems having thermally managed electric devices, can include a thermal fluid water separator assembly that is configured to separate, including remove or filter, water from thermal fluids, including, for example, from oil-based dielectric fluids, among other types of thermal fluids. The thermal fluid water separator assembly can be positioned in a variety of locations that may be, at least in terms of a flow of the thermal fluid, in parallel or in series, or a combination thereof, to the one or more thermally managed electric devices, including, for example, batteries, power electronics, and/or transformers, among other electric devices or components that are thermally managed using a thermal fluid such as a dielectric fluid, among others. Further, according to certain embodiments, the thermal fluid water separator assembly can be positioned along a bypass or water separation branch that is parallel to one or more of the main electric devices (e.g., batteries) and/or thermal management circuits.

The thermal management system can also be designed so that, due to differences in at least densities of the thermal fluid and water, if any, in the thermal fluid, the water can accumulate at one or more predetermined low point locations within the thermal management system that may be outside of the thermal fluid water separator assembly. Such low point locations can thus be provided, for example, via either or both the position and/or configuration of conduits or components of the thermal management system, and utilize the differences in densities between the thermal fluid and water. For example, according to certain embodiments, an inlet to the thermal fluid water separator assembly, a circuit for the thermal fluid water separator assembly, or an associated distribution manifold for the thermal management system, as well as any combination thereof, can be vertically located at the lowest location in the thermal management system so as to facilitate such an accumulation of water. According to such embodiments, the thermal management system can be configured to selectively deliver the accumulated water to the thermal fluid water separator assembly for separation from thermal fluid and subsequent removal from the thermal management system.

According to certain embodiments, circulation of thermal fluid by the thermal management system, including through one or more batteries, among other electric devices, and the thermal fluid water separator assembly, is powered by a primary or the main thermal fluid pump during standard operation of the thermal management system and/or of the associated device, equipment, or machine (collectively generally referred to herein as machine), including for example, operation of an associated vehicle, such as, but not limited to, an electric vehicle (e.g., EV vehicle).

Alternatively, or additionally, according to other embodiments, the thermal management system can include a secondary thermal fluid pump capable of operation independent of the primary thermal fluid pump, and which can operate during periods of machine (e.g., vehicle) inactivity, including, for example, during charging of the one or more thermally managed batteries. The secondary fluid pump can, according to certain embodiments, reverse a flow of the thermal fluid in at least a portion of the thermal management system, which can, for example, assist in drawing water from the one or more predetermined low point locations within the thermal system.

The secondary fluid pump can also be less powerful than the primary fluid pump, including, for example, with respect to attainable flow rates for thermal fluid in the thermal management system. The lower flow rates attained by the secondary thermal fluid pump can minimize, if not prevent, water or water bubbles being dissolved within the thermal fluid, which can otherwise occur with the operation of the more powerful primary thermal fluid pump. Such prevention of the dissolving of water or water bubbles within thermal fluid can further aid in the later separation of water from the thermal fluid by the thermal fluid water separator assembly.

Operation of the secondary thermal fluid pump can be intelligently controlled, or triggered by sensors, time intervals, or ambient conditions, among other triggers. According to certain embodiments, operation of the second thermal fluid pump can be triggered by one or more fluid sensors that can detect water accumulation in the one or more predetermined low point locations, including, for example, in one or more components or sub-circuits of the thermal management system. Further, the thermal management system can be configured for selective control with respect to at least local or whole system thermal fluid circulation to/through the thermal fluid water separator assembly.

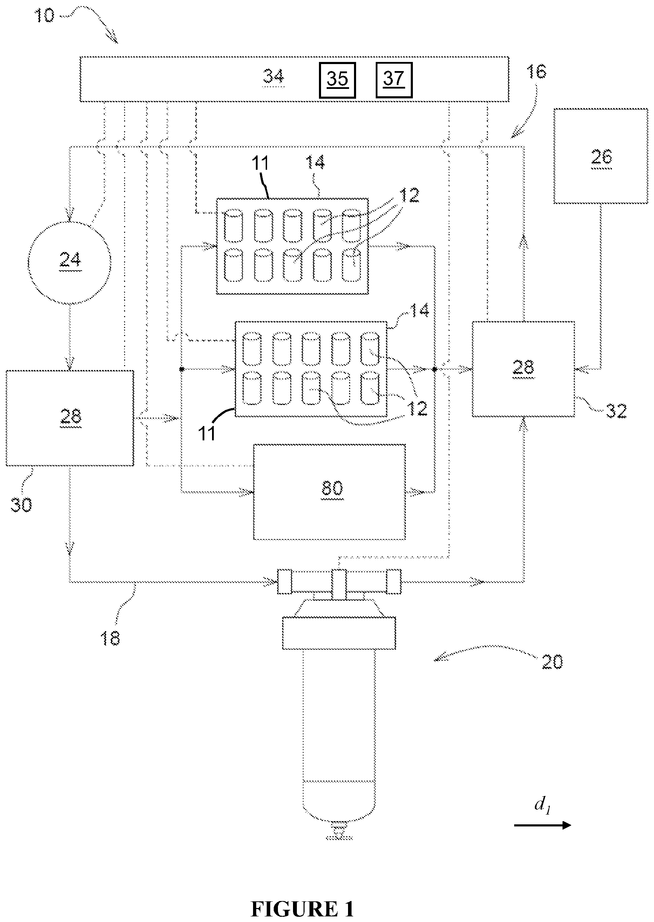

Figure 1 illustrates an exemplary thermal management system 16 used with a battery system 10 having at least one thermally managed electric device in accordance with an embodiment of the present disclosure. Moreover, in Figure 1, a battery system 10 is illustrated having at least one electric device in the form of one or more batteries 11. As illustrated, the batteries 11 can include a plurality of battery cells 12. The battery cells 12 can be cylindrical, prismatic, and/or one or more other types of cells. The batteries 11 of the thermal management system 16 can further include one or more battery housings 14 containing the plurality of battery cells 12. The thermal management system 16 is configured to selectively circulate a thermal fluid 18 through the battery housing(s) 14 to thermally control the batteries 11, and, more specifically, the battery cells 12 in the battery housing(s) 14. The thermal fluid 18 can further circulate through one or more conduits, including tubes, pipes, and/or hoses, among others, and corresponding fittings of either or both the thermal management system 16 and the battery system 10. The thermal management system 16 can also include a variety of other components or devices in addition to those shown and discussed herein, including, but not limited to, heaters, radiators, filters, control valves, and/or relief valves, as well as combinations thereof, among other components of either or both the thermal management system 16 and the battery system 10.

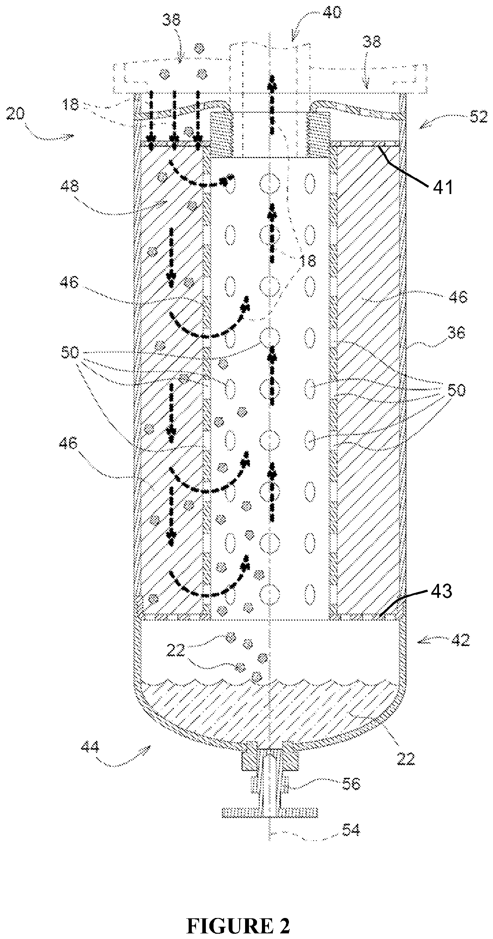

As shown in Figure 1 and in further detail in Figure 2, the thermal management system 16 further includes a thermal fluid water separator assembly 20 disposed in the thermal management system 16 and configured to separate water 22 from the thermal fluid 18 in the thermal management system 16.

The battery system of Figure 1 includes a thermal fluid pump 24 in the thermal management system 16, which can, according to certain embodiments, be a primary or main thermal fluid pump 24. The thermal management system 16 can further include a thermal fluid tank 26 and one or more thermal fluid manifold(s) 28. In an embodiment, the thermal fluid manifolds 28 can include a distribution manifold 30 and an inlet manifold 32.

The thermal management system 16 can further include a thermal management system controller 34. The thermal management system controller 34 can include one or more processors 35 that can be configured to follow instructions, including control instructions contained with, or are part of, one or more of the memory devices 37, including, for example, a non-transitory machine-readable medium. Alternatively, according to other embodiments, the thermal management system 16 can instead not include a thermal management system controller 34.

Optionally, the battery system of Figure 1 can further include one or more additional thermally managed electric devices, as generally represented in Figure 1 in the form of a thermal management component(s) 80. Such thermally managed electric devices can include, for example, power electronics, among other types of electric devices. Further, while Figure 1 illustrates the batteries 11 and thermal management component(s) 80 being used with the same thermal management system 16, according to other embodiments, another, similar thermal management system (not shown) can be used with the thermal management component(s) 80. Additionally, while embodiments illustrated herein may be discussed with respect to use of the thermal management system 16 with a battery system 10, the thermal management system 16 can be adapted for use with a variety of other types of systems, as well as machines, having different types of thermally managed electric devices that may not involve batteries 11, including, for example, with respect to transformers, among other types of thermally managed electric devices.

In one or more embodiments, selective operation of a single thermal fluid pump 24 (e.g., primary or main thermal fluid pump 24) provides a force to facilitate a flow of thermal fluid 18 through the thermal management system 16 and/or battery system 10, including to the battery housing(s) 14 of a battery(ies) 11 and thermal management component(s) 80. Such flow can also include a delivery of thermal fluid to a thermal fluid water separator assembly 20. According to the embodiment shown in Figure 1, according to certain embodiments the thermal fluid water separator assembly 20 can be positioned along one branch of the thermal management system 16 that is parallel to at least one of the electric devices (e.g., battery(ies) 11 and thermal management component(s) 80). In such embodiments, flow of the thermal fluid to the thermal fluid water separator assembly 20 can be selectively controlled, such as, for example, via the controller 34 controlling the operation of the outlet manifold 30, such that the flow of thermal fluid to the thermal fluid water separator assembly 20 happens under certain circumstances. For example, according to certain embodiments, such flow of thermal fluid to the thermal fluid water separator assembly 20 can be selectively controlled to occur only when there is flow through the entire thermal management system 16. Additionally, or alternatively, such flow to the thermal fluid water separator assembly 20 can be controlled to occur during normal operating conditions, such as, for example, when the circulation of the thermal fluid 18 is being used to manage a temperature of the battery 11 during operation of the associated vehicle. While Figure 1 depicts the thermal fluid water separator assembly 20 arranged in parallel with the thermally managed electric devices (e.g., battery(ies) 11 and thermal management component(s) 80), the thermal fluid water separator assembly 20 can also be arranged in series with some, if not all, of such thermally managed electric devices.

Figure 2 illustrates an exemplary thermal fluid water separator assembly 20 for the thermal management system 16 in accordance with an embodiment of the present disclosure. The illustrated embodiment of the thermal fluid water separator assembly 20 is included for a thermal management system 16 in an immersion-cooled battery system. The thermal fluid water separator assembly 20 includes a housing 36, a thermal fluid inlet 38, a thermal fluid outlet 40, and a water collection portion 42. The water collection portion 42 is disposed at a lower end 44 of the housing 36. Gravity at least partially causes water 22 to collect in the water collection portion 42. The thermal fluid water separator assembly 20 further includes a water separator 46 disposed in a thermal fluid pathway 48 between the thermal fluid inlet 38 and the thermal fluid outlet 40. Moreover, the water collection portion 42 can extend between a first end 41 that is at, or adjacent to, the thermal fluid inlet 38, and a second end 43 that is at, including adjacent to, the water collection portion 42.

The water separator 46 can be hydrophobic and/or can include a hydrophobic media in one or more embodiments. For example, according to certain embodiments, the water separator 46 can be constructed of a fiber, including, but not limited to, a cellulose fiber, and be coated with a hydrophobic coating. The water separator 46 can include multiple orifices 50 in one or more embodiments. The orifices 50 can be sufficiently sized and distributed in the housing 36 to minimize or prevent a significant pressure drop in the thermal fluid 18 across the thermal fluid water separator assembly 20.

According to certain embodiments, the thermal fluid inlet 38 and the thermal fluid outlet 40 can be disposed at an upper end 52 of the housing 36. The housing 36 can define an axis 54 in an embodiment. According to the illustrated embodiment, the thermal fluid inlet 38 can be disposed radially outside of the thermal fluid outlet 40 relative to the axis 54.

The thermal fluid water separator assembly 20 can further include a valve 56 disposed at the water collection portion 42 and configured for removal of water 22, also referred to as separated water, from the water collection portion 42. In an embodiment, the valve 56 and/or the water collection portion 42 is/are located at the lowest point, relative to the force of gravity, of the thermal fluid water separator assembly 20 and/or the thermal management system 16. Because water has a higher density than the thermal fluid 18 in the illustrated embodiments, the water 22 is able to separate from the thermal fluid 18 and collect at the water collection portion 42 and/or the valve 56.

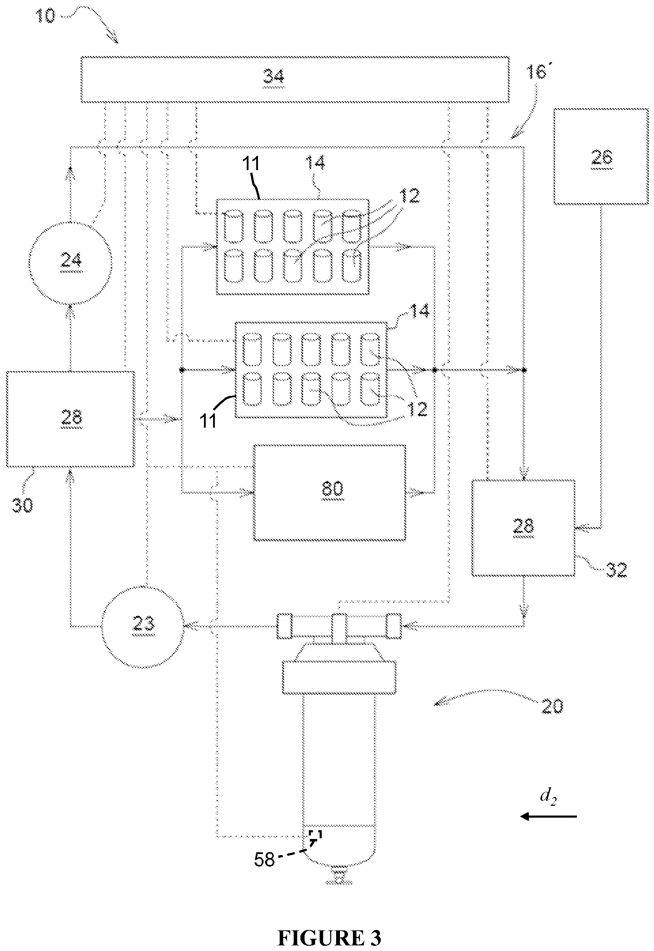

The water collection portion 42 and/or another portion of the thermal fluid water separator assembly 20 can include an at least partially transparent bowl or other portion that provides, including accommodates, a visual indication of the presence of or amount of the water 22 in the thermal fluid water separator assembly 20 in one or more embodiments. In additional embodiments, the water collection portion 42 and/or another portion of the thermal fluid water separator assembly 20 includes a separator sensor 58 (Figure 3) that provides a signal, alert, or other indication of the presence, or amount, of the water 22 in the thermal fluid water separator assembly 20 in one or more embodiments.

The separator sensor 58, which can be at least partially positioned in the water collection portion 42, can, according to certain embodiments, be an electric sensor configured to sense the presence of water 22 and/or battery fluid 18 within the water collection portion 42. According to such embodiments, the separator sensor 58 can be configured to measure variations in certain properties of either or both the thermal fluid 18 and water, as well as combinations thereof, including, for example, with respect to capacitance, conductivity, or impedance, among other properties, to determine the amount or quantity of water 22 and/or thermal fluid 18 in the water collection portion 42, with information obtained by the separator sensor 58 being communicated to the thermal management system controller 34.

Alternatively, the separator sensor 58 may be an electromechanical sensor, such as, for example, a float mechanism. According to such an embodiment, due at least to the buoyancy of the float, the float can respond to changes in liquid levels by moving vertically, providing a mechanical indication of the water level through its position. The float can be connected to a mechanical switch or sensors that generate signals that are communicated to the thermal management system controller 34 that provide an indication of the float position, which can be correlated to an amount of water 22 and/or thermal fluid 18 in the water collection portion 42. In the event that information from the separator sensor 58 or other component that senses the presence of the water 22 indicates to the thermal management system controller 34 that the water 22 has exceeded a threshold amount in the water collection portion 42, the thermal management system controller 34 can, according to certain embodiments, generate a signal that can be transmitted to inform the operator or to another local or remote receiver that certain action should be taken, such as opening the valve 56 to remove the water 22 in a non-limiting example.

According to certain embodiments, the thermal management system controller 34 can be configured to, in response to determining that signals from the separator sensor 58 indicate the amount of water 22 and/or thermal fluid 18 exceeds a predetermined threshold, adversely impact, including degrade, the operation of the associated vehicle. Additionally, or alternatively, the thermal management system controller 34 can be configured to degrade the performance of the vehicle in response to determining, from at least information provided by the separator sensor 58, that the amount of thermal fluid 18 in the water collection portion 42 has exceeded a predetermined threshold for a predetermined period of time. Such measures can seek to proactively protect the thermal management system 16 from reentry of water 22 in the water collection portion 42 back into other portions of the thermal management system 16. For example, if the level of water 22 in the water collection portion 42 rises to a portion of the thermal fluid outlet 40 that is generally adjacent to the water collection portion 42 and/or second end 43 of the water collection portion 42, as seen in Figure 2, the collected water 22 may be drawn back into other portions of the thermal management system 16. Thus, to proactively prevent such situations, the thermal management system controller 34 may degrade the performance of the associated vehicle, and/or stop operation of the vehicle, until the water 22 and/or thermal fluid 18 is drained from the water collection portion 42 via the opening of the valve 56. Such degradation in performance can include, for example, the thermal management system controller 34 adjusting one or more operational parameters of the vehicle to, for example, limit power output and/or alter battery charge and discharge rates, among other forms of degradation.

Although the thermal management system 16 of Figure 1 illustrates the thermal fluid water separator assembly 20 in parallel with the battery housings 14 and the thermal management component(s) 80, the thermal management system 16 can be arranged such that the thermal fluid water separator assembly 20 is in series with the battery housings 14 in additional embodiments. Further, the thermal management system 16 can include additional or different inlets or outlets to/from the thermal fluid water separator assembly 20 than those shown in Figure 1 in additional embodiments.

In additional embodiments, the thermal fluid water separator assembly 20 can be integrated with or include the thermal fluid pump 24. In such embodiments, flow of the thermal fluid 18 through the thermal fluid water separator assembly 20 in the thermal management system 16 can be generated when flow in the remaining portions of the thermal management system 16 is inactive. Further, the thermal management system 16 can be configured to move or circulate the thermal fluid 18 in either direction and/or through any portion of the thermal management system 16 to optimize water collection, including in a second direction (as generally indicated by a second direction "*d₂*" in Figure 3) that can be opposite from a first flow direction (as generally indicated by a first direction "*d₁*" in Figure 1) of the thermal fluid 18 while the thermal management system 16 is under normal operation. The thermal fluid pump 24 can be run during periods of time when the thermal management system 16 or the vehicle or application for the thermal management system 16 is inactive, including prior to starting operation, during charging, and/or other situations where the thermal management system 16 is not required to be operational, therefore improving the ability for water to settle or otherwise be separated in the thermal management system 16 as compared to conditions when the thermal fluid pump 24 is operating normally.

In one or more additional embodiments, a single thermal fluid pump 24 provides flow to the battery housing(s) 14 and thermal management component(s) 80, and a secondary pump 23 (Figure 3) generates flow separately to the thermal fluid water separator assembly 20. Further, in such embodiments, the secondary pump 23 can generate flow in the first, normal direction (*d₁*) of operation while the thermal fluid pump 24 is on or off, and the secondary pump can generate flow in a second direction (*d₂*) that is opposite to the first, normal direction (*d₁*) of operation while the thermal fluid pump 24 (e.g., primary or main pump 24) is on or off. Figure 3 illustrates another exemplary thermal management system 16' that includes a secondary thermal fluid pump 23 that is capable of operating during periods of activity and/or inactivity of the associated battery system 10 or machine. Additionally, optionally, the secondary thermal fluid pump 23 can operate independently of the main thermal fluid pump 24.

The secondary pump 23 can be positioned at a variety of locations relative to the thermal fluid water separator assembly 20, including, for example, on top, downstream, or upstream of the thermal fluid water separator assembly 20, among other locations. Thus, the secondary pump 23 can be integrated with the thermal fluid water separator assembly 20 or disposed separately in the thermal management system 16'.

According to certain embodiments, the secondary pump 23 can be less powerful than the primary thermal fluid pump 24. Moreover, the more powerful primary thermal fluid pump 24 can generate a relatively significant rate of flow of thermal fluid 18 within the thermal management system 16' that can have the capability to dissolve water or fragment water bubbles into very small bubbles, making the water more difficult to separate from the thermal fluid 18 by the thermal fluid water separator assembly 20. The secondary pump 23 can therefore be sized to operate at a lower flow rate, thereby facilitating the water bubbles remaining in their generally larger, and more easily separable, configuration. According to certain embodiments, the secondary pump 23 can be a centrifugal pump, diaphragm pump, or a positive displacement pump, among other types of pumps.

During periods of inactivity, an associated machine in the form of a vehicle may not be operated, including, for example, being parked for periods of time or during charging, among other periods of inactivity. For at least such instances, the secondary pump 23 can be positioned to facilitate water separation by potentially reversing the flow of thermal fluid (e.g., facilitate flow in the second direction (*d₂*)) within at least a portion of the thermal management system 16' relative to at least the direction of flow (e.g., first direction (*d₁*)) while the thermal fluid pump 24 is operating. This reverse flow can aid in extracting water from predetermined low point locations in the thermal management system 16', thereby enhancing the efficiency of water removal.

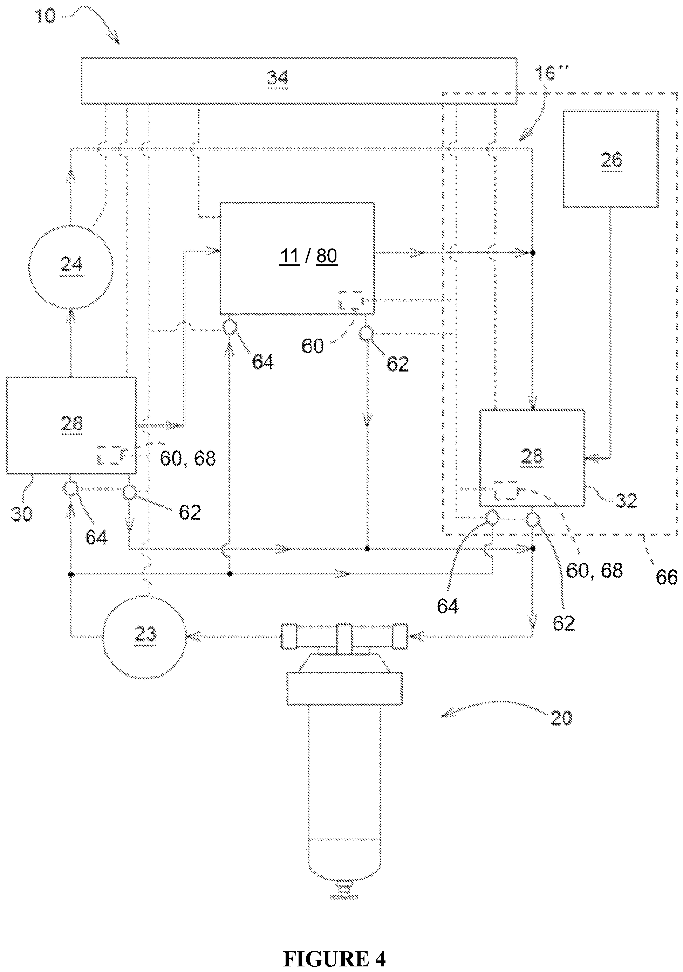

The secondary thermal fluid pump 23 can be strategically operated under time-based control, ambient conditions, or in response to triggers from fluid sensors, including, for example, one or more fluid sensor 60, as shown in Figure 4. According to certain embodiments, the fluid sensor(s) 60 can be communicatively coupled to the thermal fluid system controller 34 such that, in response to information provided by the fluid sensor 60, the thermal fluid system controller 34 can selectively activate either or both the thermal fluid pump 24 and the secondary pump 23, including during periods of activity or inactivity of the associated machine (e.g., vehicle).

The fluid sensor 60 can be configured to sense information, including either or both properties or amounts, of either, or, alternatively, both, the thermal fluid 18 and the water. For example, the fluid sensor 60 can be configured to detect amounts, or levels, of the thermal fluid and/or water, as well as combinations thereof, including at an associated predetermined low point location 68 in a manner similar to that discussed above with respect to the separator sensor 58. Additionally, the fluid sensor 60 can also be configured to collect information regarding one or more properties of the liquid (e.g., thermal fluid 18 and/or water) accumulated at the low point location 68, including, for example, with respect to capacitance, conductivity, and/or impedance, among other properties, that can be used by the thermal fluid system controller 34 to determine the amount, quantity, or quality of water 22 and/or thermal fluid 18 at one or more locations within the thermal management system 16", including at a low point location(s) 68. The thermal management system 16" can also be configured such that portions, or sub-circuits of the thermal management system 16" and/or associated system (e.g., battery system 10) can be selectively isolated in connection with use of the thermal fluid water separator assembly 20. Moreover, such isolation can accommodate thermal fluid 18 and/or accumulated water, as well as combinations thereof, from portions, but not all, of the thermal management system 16" being selectively circulated through the thermal fluid water separator assembly 20, including, for example, via selective operation of the secondary pump 23. For example, Figure 4 illustrates an embodiment in which the thermal management system 16" includes at least one sub-circuit 66 that can be isolated, for at least purposes of use of the thermal fluid water separator assembly 20, from other portions of the thermal management system 16", and vice versa. According to such, isolation of the sub-circuit 66 from other portions of the thermal management system 16" can be facilitated by the thermal fluid system controller 34 selectively opening or closing one or more outlet valves 62 and inlet valves 64 of the thermal management system 16".

For example, as seen in Figure 4, a first fluid sensor 60 can be positioned in a sub-circuit 66 that can include one or more of the thermal fluid tank 26 and at least a portion of the inlet manifold 32. In the illustrated location, such a first fluid sensor 60 can be positioned at a low point location 68 that can correspond to a low point in the sub-circuit 66, including, for example, at a potential inlet to a line or conduit that can deliver at least thermal fluid 18 to the thermal fluid inlet 38 of the thermal fluid water separator assembly 20. Such a configuration can, at least in part, be configured to eliminate water that may have formed from condensation that may be attributed to humidity that entered into the thermal management system 16" and/or battery system 10 during venting, as discussed above. According to such an embodiment, attempts to direct the thermal fluid 18, and any associated water, from the sub-circuit 66 through at least the thermal fluid water separator assembly 20 may, or may not, occur, during periods of inactivity and may be facilitated by the operation of the secondary pump 23. Similarly, the thermal management system 16" may include one or more other outlet and inlet valves 62, 64 that can be used for directing thermal fluid 18, and any associated water, from portions of the thermal management system 16" other than the sub-circuit 66. For example, as seen in Figure 4, outlet and inlet valves 62, 64 associated with the distribution manifold 30 can, either alone, or in connection with the outlet and inlet valves 62, 64 at the inlet manifold 32, be used to direct thermal fluid 18, and associated water, for such other portions of the thermal management system 16" to at least the thermal fluid water separator assembly 20. As seen, such selective isolation can be triggered using information provided by at least a second fluid sensor 60, independent of, or in connection with, information provided by the previously discussed first fluid sensor 60, which may also be located at a low point location 68 and may also be facilitated by similar selective operation of the secondary pump 23.

The thermal management system 16‴ can also include other fluid sensors 60, or be a fluid sensor 60 in another location. For example, Figure 4 also illustrates a third fluid sensor 60 positioned in, or around, a thermally managed electric device, in this example, a battery 11 or power electronic component 80, such as, for example, power electronics or a transformer. Further, in this example, the third fluid sensor 60 may, or may not, be at an associated low point location 68. Further, as with other embodiments, in response to an evaluation, by the controller 35, of information obtained by the fluid sensor 60, including with respect to target information, one or more outlet and inlet valves 62, 64 can be selectively operated to isolate the electric device (e.g., battery 11 or thermal management component 80) from at least other components or devices of the thermal management system 16‴, or of the associated system 10, such that the thermal fluid 18 associated with the information obtained by the third fluid sensor 60 can be circulated to the separator 20 via operation of either, or both, the primary pump 24 and the secondary pump 23.

Without in any way limiting the scope, interpretation, or application of the claims appearing below, a technical effect of one or more of the example embodiments disclosed herein is to prevent water or reduce the amount of water in the thermal management system 16, 16', 16". Further, the embodiments disclosed herein allow such reduction or removal without substantial draining, overhaul, removal, or other more extensive service operations to the thermal management system 16, 16', 16'' and/or the thermal management system 16, 16', 16". Any one or more features, structures, and/or functions of any embodiment(s) of the thermal management system 16, 16', 16" and/or the separator 20 described or shown herein may be added to or combined with one or more other embodiment(s) of the thermal management system 16, 16', 16" and/or the separator 20 described or shown herein, or omitted from such embodiment(s), to form one or more additional embodiment(s) of the thermal management system 16 and/or the separator 20 or related methods in accordance with the present disclosure. Additionally, any one or more steps, processes, and/or methods of any embodiment(s) of the thermal management system 16, 16', 16" and/or the separator 20 described or shown herein may be added to or combined with one or more other embodiment(s) of the thermal management system 16, 16', 16" and/or the separator 20 described or shown herein, or omitted from such embodiment(s), to form one or more additional embodiment(s) of the thermal management system 16, 16', 16" and/or the separator 20 or related methods in accordance with the present disclosure.

As used herein, "e.g." is utilized to non-exhaustively list examples and carries the same meaning as alternative illustrative phrases such as "including," "including, but not limited to," and "including without limitation." Unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

Those having ordinary skill in the art will recognize that terms such as "above," "below," "upward," "downward," "top," "bottom," etc., unless described differently, are used descriptively for the figures and may not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally," "substantially" or "approximately" are understood by those of ordinary skill to refer to reasonable ranges outside of a given value or orientation, for example, general tolerances or positional relationships associated with manufacturing, assembly, and use of the described embodiments.

While the above describes example embodiments of the present disclosure, these descriptions should not be viewed in a limiting sense. Rather, other variations and modifications may be made without departing from the scope and spirit of the present disclosure as defined in the appended claims.

## Claims

1. A battery system (10) comprising:
an electric device (11, 12, 80) configured to be thermally controlled by a circulation of a thermal fluid (18);
a thermal management system (16, 16', 16") configured to circulate the thermal fluid (18) to at least the electric device (11, 12, 80); and
a thermal fluid water separator assembly (20) disposed in the thermal management system (16, 16', 16") and having a media (46) configured to separate a water from the thermal fluid (18), the water separated from the thermal fluid (18) by the thermal fluid water separator assembly (20) being a separated water,
wherein the thermal fluid water separator assembly (20) is further configured to collect the separated water and accommodate a selective removal of the separated water from the thermal fluid water separator assembly (20).

2. The battery system (10) of claim 1, wherein the electric device (11, 12, 80) is a plurality of battery cells (12), the battery system further comprising at least one battery housing (14) containing the plurality of battery cells (12).

3. The battery system (10) of claim 1 or 2, wherein the thermal management system (16, 16', 16") comprises a primary pump (24) and a secondary pump (23),
wherein the primary pump (24) facilitates a first flow of the thermal fluid (18) during a period of activity of a machine having the battery system (10),
wherein the secondary pump (23) facilitates a second flow of at least a portion of the thermal fluid (18) during a period of inactivity of the machine, and
wherein the secondary pump (23) is configured to generate a second flow rate during the second flow that is smaller than a first flow rate generated by the primary pump (24) during the first flow.

4. The battery system (10) of claim 3, wherein the second flow is in a second direction that is different than a first direction of the first flow.

5. The battery system (10) of one of the claims 1 to 4, further comprising:
a separator sensor (58) positioned to obtain an information indicative of the separated water collected by the thermal fluid water separator assembly (20);
at least one processor (35); and
a memory device (37) coupled with the at least one processor (35), the memory device (37) including instructions that when executed by the at least one processor (35) cause the at least one processor (35) to:
evaluate the information obtained by the separator sensor (58); and
trigger a response based on an outcome of an evaluation of the information.

6. The battery system (10) of claim 5, wherein the response is a degradation in a performance of a machine having the battery system (10).

7. The battery system (10) of claim 6, wherein the degradation is an adjustment of an operational parameter of the machine, and wherein the machine is an electric vehicle.

8. The battery system (10) of one of the claims 5 to 7, wherein the information is a quantity or a level of the separated water collected by the thermal fluid water separator assembly (20).

9. The battery system (10) of claim 1 or 2, further comprising:
at least one pump (23, 24);
a fluid sensor (60) positioned to obtain an information indicative of a fluid collected in a portion of the thermal management system (16, 16', 16"), the fluid comprising at least one of the thermal fluid (18), the water, or a combination of the thermal fluid (18) and the water;
at least one processor (35); and
a memory device (37) coupled with the at least one processor (35), the memory device (37) including instructions that when executed by the at least one processor (35) cause the at least one processor (35) to:
evaluate the information obtained by the fluid sensor (60); and
trigger a response based on an outcome of an evaluation of the information, the response comprising an activation of the at least one pump (23, 24) to facilitate a flow of the fluid to the thermal fluid water separator assembly (20).

10. The battery system (10) of claim 9, wherein the fluid sensor (60) is positioned at a predetermined low point location (68) of the thermal management system (16, 16', 16").

11. The battery system (10) of claim 9 or 10, wherein the at least one pump (23, 24) comprises a primary pump (24) and a secondary pump (23), the primary pump (24) being a higher powered pump than the secondary pump (23) at least with respect to a generated flow rate of the thermal fluid (18), and wherein the activation of the at least one pump (23, 24) comprises an activation of the secondary pump (23) and not an activation of the primary pump (24).

12. The battery system (10) of one of the claims 9 to 11, wherein the response further comprises a generation of a signal to isolate at least a portion of the battery system (10) at which the fluid sensor (60) is position from at least another portion of the battery system (10).

13. The battery system (10) of one of the claims 1 to 12, wherein the thermal fluid water separator assembly (20) comprises:
a housing (36);
a thermal fluid inlet (38) disposed in the housing (36);
a thermal fluid outlet (40) disposed in the housing (36);
a water collection portion (42) configured to collect the separated water, the water collection portion (42) being disposed at a lower end (44) of the housing (36); and
a water separator (46) disposed in a thermal fluid pathway (48) between the thermal fluid inlet (38) and the thermal fluid outlet (40), the water separator (46) being hydrophobic and comprising a plurality of orifices (50),
wherein gravity at least partially causes the separated water to collect in the water collection portion (42).

14. The battery system (10) of claim 13, wherein the thermal fluid inlet (38) and the thermal fluid outlet (40) are disposed at an upper end (52) of the housing (36).

15. The battery system (10) of claim 13, wherein the housing (36) defines an axis (54), and wherein the thermal fluid inlet (38) is disposed radially outside of the thermal fluid outlet (40) relative to the axis (54).
